(19) Europäisches Patentamt
European Patent Office
Office européen des brevets

(11) **EP 2 372 699 B1**

(12) **EUROPEAN PATENT SPECIFICATION**

(45) Date of publication and mention of the grant of the patent:
**19.12.2012   Bulletin 2012/51**

(51) Int Cl.:
***G10L 19/00*** *(2006.01)*      ***H04N 7/26*** *(2006.01)*

(21) Application number: **10155236.2**

(22) Date of filing: **02.03.2010**

(54) **Coding of audio or video samples using multiple quantizers**

Kodierung von Ton- oder Videoabtastwerten unter Verwendung von mehreren Quantisierern

Codage d'échantillons audio ou vidéo utilisant des quantificateurs multiples

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**05.10.2011   Bulletin 2011/40**

(73) Proprietor: **Google Inc.**
**Mountain View, CA 94043 (US)**

(72) Inventors:
• **Li, Minyue**
**SE -170 70 Solna (SE)**
• **Kleijn, Willem Bastiaan**
**NZ-6012 Wellington (NZ)**

(74) Representative: **Badel, Xavier Claude Yves et al**
**Awapatent AB**
**P.O. Box 45086**
**104 30 Stockholm (SE)**

(56) References cited:
**EP-A2- 0 239 076      EP-A2- 1 361 567**
**JP-A- 2003 018 593      US-A- 5 287 200**

• **LI MINYUE ET AL: "Quantization with Constrained Relative Entropy and Its Application to Audio Coding", AES CONVENTION 127; OCTOBER 2009, AES, 60 EAST 42ND STREET, ROOM 2520 NEW YORK 10165-2520, USA, 1 October 2009 (2009-10-01), XP040509155,**

## Description

Field of the invention

The invention disclosed herein generally relates to devices and methods for processing signals, and particularly to devices and methods for quantizing signals. Typical applications may include a quantization device for audio or video signals or a digital audio encoder.

Technical background

Quantization is the process of approximating a continuous or quasi-continuous (digital but relatively high-resolving) range of values by a discrete set of values. Simple examples of quantization include rounding of a real number to an integer, bit-depth transition and analogue-to-digital conversion. In the latter case, an analogue signal is expressed in terms of digital reference levels. Integer quantization indices may be used for labelling the reference levels, whose total number determines the bit rate needed for transmitting the digital signal at a certain time resolution. As used herein, quantization does not necessarily include changing the time resolution of the signal, such as by sampling or downsampling it with respect to time.

Analogue signals are commonly quantized to enable transmission over a digital network. The reconstruction step at the receiving end may consist of a straightforward replacement of the quantization indices by analogue segments corresponding to the digital reference levels. However, at least if a moderate number of reference levels are applied, perceptible quantization noise may occur in the reconstructed signal. More-over, for the common case where a conventional distortion criterion is used and the signal is zero mean, the signal power will decrease with decreasing rate. In transform-based quantization of audio signals, where the source signal is decomposed into frequency components, which are then subjected to scalar quantization, annoying artefacts appear at low rate. At such rates, many of the frequency components are intermittently quantized to zero. In a spectrogram, a time-frequency plot of the signal power, the non-zero episodes may occupy isolated areas, reminiscent of islands.

The above problem - and possibly other drawbacks associated with quantization - may be mitigated by increasing the bit rate. However, quantization is generally applied to reduce the bit rate for the purpose of saving bandwidth and storage cost.

The problem can also be addressed by attempting to optimize the quantization procedure itself. However, well-known theoretical bounds exist on the rate-distortion performance of a quantizer. Low-rate quantizers that are trained with, for example, the well-known generalized Lloyd algorithm perform close to the theoretical bound but still suffer from the mentioned artefacts.

Dithering may improve the audible or visual impression of the reconstructed signal. So-called subtractive dither, where the dither is added at the encoder before quantization and subtracted at the decoder after decoding of the quantizer, is particularly effective since it allows coding to remain asymptotically optimal (with increasing rate) from the rate-distortion perspective. It has been established that dithering can mitigate artefacts that are associated with an unintended statistical correlation between the quantization error and the source signal value. However, at low rates, where the quantization artefacts are most problematic, the established dithering techniques result in a reconstructed signal that has a probability density that differs significantly from that of the original signal. Such differences are generally observable and perceived as annoying.

In addition to these attempts to improve the quantization itself, the field of audio technology offers several techniques for reducing the low-rate artefacts a posteriori: band limitation (see M. Erne, "Perceptual audio coders 'what to listen for'", 111th Convention of the Audio Engineering Society, Sept. 2001), a regularization method for tonal-like signals (see L. Daudet and M. Sandler, "MDCT analysis of sinusoids: exact results and applications to coding artifacts reduction", IEEE Transactions on Speech and Audio Processing, vol. 12, no. 3, May 2004) and noise fill (see S. A. Ramprashad, "High quality embedded wideband speech coding using an inherently layered coding paradigm," in Proc. IEEE International Conference on Acoustics, Speech, and Signal Processing ICASSP '00, vol. 2, June 2000).

At low rates, signals are commonly described with so-called parametric coders. In contrast to the above-described coders that quantize the signal waveform, parametric coders do not attempt to preserve the waveform, but attempt to preserve only a set of salient features of the signal. To this purpose, parametric coders transmit only the time-varying parameters of a generative signal model. Usually, the models can be interpreted as a statistical model of the signal. At the decoder, a new signal is generated using the signal model. In general such signal generation provides the best perceived performance at very low rate, but, because of shortcomings of the signal model, does not provide competitive performance at high rate.

Summary of the invention

It is with respect to the above considerations and others that the present invention has been made. The present invention seeks to mitigate, alleviate or eliminate one or more of the above-mentioned deficiencies and drawbacks singly or in combination. It would also be desirable to provide a quantization method and quantization device that introduces a limited amount of perceptible artefacts when applied to audio coding or video coding, down to moderate bit rates.

As used herein, a *signal* may be a function of time or a time series that is received in real time or retrieved from a storage or communication entity, e.g., a file or bit stream containing previously recorded data to be processed. A *sample* is a value of a one-dimensional or multidimensional signal, and can thus have any number of components. A multidimensional signal can be a sequence of blocks of samples of a one-dimensional signal. The *entropy* of a signal X mav be defined as follows:

$$h(X) = - \int_{\mathbb{R}} f_X(x) \log(f_X(x)) \, dx,$$

where $f_x$ is a probability density (which may be discrete) of the signal X. The entropy can be calculated analytically or numerically. Further, *quantization* is understood as the associated processes of encoding and decoding a signal or a sequence of signal samples, wherein the encoded signal is expressed in terms of a discrete set of values. A *quantizer* is an apparatus for encoding and/or decoding. The properties of a quantizer depends on its quantization cells and their corresponding reconstruction values. Thus, a quantizer may also be an abstract representation of an apparatus or an algorithm in terms of its quantization cells and corresponding reconstruction values. Finally, an *ensemble of quantizers* is a collection of quantizers labelled by values of a parameter. An ensemble of quantizers may be finite or infinite, and countable or uncountable, the latter case arising, e.g., if a continuous-valued parameter is used.

To better address one or more of the above concerns, quantization methods and devices as defined in the independent claims are provided. Embodiments of the invention are defined in the dependent claims.

In a first aspect, the invention provides an encoding method characterized by the fact that several quantizers are applied, one at a time, in an alternating fashion. In an illustrative one-dimensional (scalar) case, the method may comprise the following steps:

- defining an ensemble of quantizers ($\phi^{(j)}$, $j$ = 1,2, ...), each of which comprises a partition into quantization cells $\left( \left[ b_i^{(j)}, b_{i+1}^{(j)} \right], i = 1, 2, ... \right)$ and a reconstruction point ($c_i^{(j)}$) associated with each quantization cell;

- encoding each source signal sample ($x_k$) by a quantization index indicating a quantization cell of a quantizer ($\phi^{(j(k))}$) selected either randomly or following a predetermined sequence, from said ensemble of quantizers, wherein the quantization cell contains the source signal sample $\left( b_{i_k}^{(j(k))} \le x_k \le b_{i_k+1}^{(j(k))} \right)$; and

- repeatedly selecting, from said ensemble of quantizers, a quantizer ($\phi^{(j(k))}$) to be used for subsequent encoding and if the selection is random, further outputting an indication of past and/or present selections of quantizers so as to facilitate subsequent decoding.

In a second aspect, the invention provides a decoding method which is characterized by an alternation between several quantizers used for assigning a reconstruction point to a quantization index in the sequence to be reconstructed. In a one-dimensional case, the decoding method may comprise the following steps:

- obtaining an ensemble of quantizers ($\phi^{(j)}$, $j$ = 1, 2, ...), each of which comprises a plurality of reconstruction points ($c_i^{(j)}$, $_i$ = 1, 2, ...);
- for each quantization index ($i_k$):

    o obtaining an indication of a particular quantizer ($\phi^{(j(k))}$) to which said quantization index ($i_k$) refers by accessing either stored past random selections or a predetermined sequence, on which the selection of quantizers is based during encoding; and
    o decoding said quantization index by a corresponding reconstruction point ($c_{i_k}$).

The encoding method and the decoding method are both applicable in a multi-dimensional (vector) case, with appropriate modifications. E.g., the partition into quantization cells in higher dimensions may be more conveniently defined in terms of Voronoi regions of a point set, rather than in terms of cell boundaries. The boundaries of the Voronoi regions can be regarded as implied boundaries of a partition. Each of the methods may also be applied to a transform of a signal, such as time-variable components corresponding to frequency components.

The encoding and decoding may be performed by entities that are separated in time or space. For instance, encoding may be carried out in a transmitter unit and decoding in a receiving unit, which is connected to the transmitter unit by a digital communications network. Further, encoded analogue data may be stored in quantized form in a volatile or non-volatile memory; decoding may then take place when the quantized data have been loaded from the memory and the encoded data are to be reconstructed in analogue form. Moreover, quantized data may be transmitted or stored together with the quantization parameters (e.g., parameters defining the partition into quantization cells or parameters used for characterizing the reconstruction points). The quantization parameters may then be used for carrying out decoding of the quantized data.

In further aspects of the invention, there are provided a computer program product storing computer-readable instructions for executing one of the above methods. There are further provided apparatus for encoding, decoding or quantization. Additionally, there is provided a method of manufacturing an encoder, decoder or quantizer according to the invention, which method includes designing an ensemble of quantizers. An embodiment of the invention as an apparatus can in general be readily adapted to a method and vice versa. Furthermore, apparatus and methods according to the invention generally share the same advantages.

The invention solves the problem of introducing only a limited amount of artefacts into the subsequently reconstructed signal by virtue of the alternation between quantizers. Hence, no statistical correlation between quantization errors and signal values - that could otherwise be connected with undesirable artefacts which may be audible in the reconstructed signal - can arise. The quantizers are advantageously selected such that the variance of the signal remains similar to that of the original signal, even when the rate is reduced, further decreasing the observable distortion.

In one embodiment of the encoding method or encoding apparatus, the repeated selection of quantizers follows a predetermined sequence. Such predetermined sequence may be pseudo-random. The sequence may be periodic with period of such duration that audible correlation-related artefacts arise to a limited extent or not at all.

As a counterpart to the preceding embodiment, a decoding method or decoding apparatus has access to the predetermined sequence which the selection of quantizers follows; this is how the method obtains an indication of a particular quantizer to which a quantization index refers. Thus, the quantization indices generated by the sequence of quantizers can be decoded using the appropriate quantizers.

In one embodiment, the repeated selection of quantizers used for encoding is made randomly, such as by means of a random-number generator. To facilitate subsequent decoding, such random selection is preferably accompanied by outputting an indication of the quantizers which have been selected and for what samples. Preferably, this embodiment may further include assigning a selection probability to each quantizer; the selection probability governs the random selection, so that some quantizers can be given greater weight than others. It is also possible to select the quantizers with a uniform probability.

Each of the preceding embodiments are preferably combined with a decoder that obtains information of the outcomes of the random selection, so as to enable decoding of the quantization indices by appropriate decoders.

In an embodiment, the selection probabilities of the quantizers of the ensemble are chosen so that the statistical distribution of the reconstruction values is close to (approximates) the distribution of the original signal values. Advantageously, the approximation accuracy can be measured by a Kullback-Leibler divergence. The selection probabilities may vary in time with estimated probabilities of the values in the original signal.

In one embodiment, the frequency at which a quantizer is selected or reselected - whether randomly or deterministically - is constant. The frequency may also be variable over time or be related to the sample frequency.

In an embodiment, the ensemble of quantizers used by an encoding method or a decoding method further contains quantizers that are all defined on the basis of optimizations of quantization cell locations and corresponding reconstruction points. All such optimizations are performed with respect to a fixed objective function (criterion) which is a weighted sum of at least:

- a bit rate,
- a signal distortion, and
- a fidelity of the probability distributions of a source signal and a reconstructed signal.

The bit rate may be measured in bits per second. The signal distortion is a conventional distortion measure. In particular, it may be a perceptually weighted squared-error criterion. A measure of the fidelity of the probability distributions may be a relative entropy - or Kullback-Leibler divergence - between a source signal and a reconstructed signal. The Kullback-Leibler divergence vanishes when the probability distributions of the original and reconstructed signal are identical.

In addition to the preceding embodiment, there is provided a method of simultaneous design of an ensemble of quantizers. By fixing suitable weights, a pre-defined balance between the mean performance of an ensemble of the quantizers can be achieved. Advantageously, all quantizers in the obtained ensemble are obtained by optimization with respect to the same objective function (criterion), which provides for homogeneous audio quality of the subsequently reconstructed signal. However, the inclusion of a relative entropy conveys a further advantage, namely that the optimization does not yield degenerated solutions as long as the initial values (initial quantizers) provided to the optimization are distinct. This ensures that the quantization operations achieved by distinct quantizers indeed has sufficient independence that only a limited amount of audible correlation-related artefacts can arise. Moreover, the inclusion of relative entropy ensures that the signal variance does not converge to zero when the rate decreases to zero.

In an embodiment, a method for designing an ensemble of optimal quantizers (being optimal in the above sense) comprises the following steps:

- receiving a sequence $(X_T)$ of training signal samples;
- defining said fixed objective function $(\eta)$;
- defining a displacement step $(C\sigma)$ proportional to the standard deviation $(\sigma)$ of the training signal samples;
- for each quantizer to be generated:

    o defining an initial quantizer $(\hat{\phi}^{(j)})$ comprising quantization cells (together forming a partition) and corresponding reconstruction points;
    o performing one or more iterations, each consisting of the following steps:

        ■ locally optimizing the partition, such that real or implied cell boundaries remain within the displacement step $(C\sigma)$, with respect to the objective function $(\eta)$ evaluated for the sequence $(X_T)$ of training samples, thereby obtaining an optimized partition;
        ■ locally optimizing each of said initial reconstruction points within at most the displacement step with respect to the objective function $(\eta)$ evaluated for the sequence $(X_T)$ of training samples, thereby obtaining an optimized reconstruction point $(c_i^{(j)}$ and

    o storing a quantizer $(\phi^{(j)})$ comprising the optimized quantization cells and reconstruction points;

- outputting an ensemble of quantizers $(\phi^{(j)}, j = 1, 2, ...)$ containing the stored quantizers.

The above method may form part of an encoding method or a decoding method. It may also be performed in a standalone fashion for the manufacture of quantization apparatus according to the invention. In particular, the ensemble of quantizers thus obtained may be stored on a memory and included in a hardware product for decoding or encoding, respectively.

In an embodiment related to the above (sub)method for designing an ensemble of quantizers, the proportionality constant C is at most 0.01, and preferably 0.003. Preferably, the training sequence is representative of the signal (music, speech, video, etc.) to be coded by the quantizers.

In a further embodiment related to the (sub)method for designing an ensemble of quantizers, the size of the quantization cells of an initial quantizer is an exponential function of the entropy (see definition above) of the training signal and the bit rate. This will ensure a fast divergence to an optimal quantizer. In particular, the size may be set to $\Delta = 2^{h(X)-R}$, where $h(X)$ is the entropy and R is the rate.

In an embodiment of the invention, there is provided a method of adaptively coding a sequence of source signal samples. The method is a further development of the encoding methods disclosed above, insofar as it further comprises defining at least two ensembles of quantizers using different objective functions . A decision to define a new ensemble of quantizers may be taken responsive to an observed variation of properties of the source signal samples to be encoded. The objective function (criterion) used for defining the new ensemble of quantizers may be adapted in accordance with the observed variation of the properties. The adaptation may take place by reweighting a sum of a bit rate, a signal distortion and a fidelity of the probability distributions of a source signal and a reconstructed signal.

The design procedure is equivalent to optimizing any one of the three measures subject to constraints on the other two measures. The weighted criterion then forms the extended criterion resulting from the well-known Lagrange-multiplier approach. In this case the two relevant weights are determined by the constraints.

One aspect of the invention is the usage of the designed ensemble of optimized quantizers for encoding a sequence of source signal values. For this purpose, a time ordering of the quantizers is selected. The time ordering must result in an overall selection rate of each quantizer that corresponds to the design probability of that quantizer, thus resulting in a fidelity of the distribution of the reconstructed points consistent with the design goal Encoder and decoder are knowledgeable about the selection-order of the quantizers. The time ordering is generally a pseudo-random sequence.

By weighting the three components of the design criterion, a trade-off between the fidelity of the probability distribution, the rate, and the conventional distortion can be achieved. If the fidelity of the probability is weighted by a zero weight, then the optimal solution is that all quantizers of the ensemble are identical to a conventional rate-distortion optimal quantizer. In general such coders are referred to as waveform coders. If the fidelity of the probability is weighted relatively high, the reconstructed signal will have a probability density that resembles that of the original signal, but it will, not in general lead to an optimal trade-off between rate and distortion. For the case where the distortion weight approaches zero, the distortion obviously becomes high, the rate for coding the signal will approach zero, and the decoded signal will resemble that obtained with a conventional parametric coding setup.

Any of the above embodiments can be generalized into a multi-dimensional quantization process, wherein the source signal, the quantization index and the reconstructed signal are vector-valued. In the context of audio coding, each vector component may encode one audio channel, or it may describe a subsequent signal segment.

Brief description of the drawings

Embodiments of the present invention will now be disclosed in more detail with reference to the accompanying drawings, on which:

figure 1 is a signal diagram of an encoder and a decoder applying different quantizers in an alternating fashion, in accordance with an embodiment of the invention; and
figure 2 is a block diagram showing the components of an encoder in accordance with an embodiment of the invention.

Detailed description of embodiments

In this description of embodiments of the invention, the first two sections discuss and define quantizers and performance measures in general. The next two sections use these definitions to define the embodiment of the generalized quantizer according to the invention. A fifth section discusses adaptive quantization according to the invention.

I. Quantization

In the following description of methods and apparatus according to the invention, the source signal, the quantization index and the reconstructed signal will be modelled as random variables $X$, $I$ and $\hat{X}$. The variables X and $\hat{X}$ can be scalars or vectors, and the variable $I$ is a scalar. Realizations of X and X, denoted as x and $\hat{x}$, take values in real space of one or more dimensions, whereas realizations of $I$ take values in a countable set, such as the natural numbers.

It is common to apply quantization to a transform or filtering of an original signal segment or of an original signal. Herein, the variable X is taken to be the variable that forms the input to the quantizer. $\hat{X}$ is then subjected to an inverse transform or filtering operation before rendering an approximation of the original signal. The distortion criterion used in the quantization may depend on the transform or filtering operation.

The conventional goal of quantizer design is to minimize a distortion measure (which is a function of quantization error) between the source signal and the quantized signal, subject to a bit rate budget. That is, it optimizes the operational rate-distortion trade-off of the quantizer. As the quantizer attempts to minimize a distortion measure, the optimal reconstructed signal will depend on the choice of the measure. However, in general the penalty assigned by a distortion measure increases when the quantization error is increased by a factor greater than one. This means that with increasing rate the reconstructed signal more accurately matches the signal waveform of the source. Thus, coding a source with a quantizer is sometimes referred to as "waveform coding".

The mapping from X to $I$ is a space partition, with $I$ representing an index to a particular cell. As for each quantization cell only one number, the index, is transmitted, minimization of the distortion leads to a unique reconstruction value, or centroid, for each cell. This corresponds to optimization of the decoder for the quantizer. Important in the current context is that the optimization procedure generally results in a one-to-one mapping from $I$ to $\hat{X}$. (An exception to this is a decoder with dithering that is independent of the encoder.) As an aside it is noted that iterative optimization of the decoder and the partition (which corresponds to the encoder) is a conventional method for optimization of the quantizer, commonly referred to as the Lloyd algorithm, the Lloyd/Max algorithm, or the generalized Lloyd algorithm.

Since the mapping from $I$ to X is one-to-one, $\hat{X}$ is discrete. At low rates this leads to a situation where very few reconstruction points are used. In the case of constrained-resolution coding, the number of available points is restricted to $2^l$, where $l$ is the selected codeword length. For the case of constrained-entropy coding, the quantization step size increases with decreasing rate. At low rates only very few reconstruction points have a probability that differs significantly from zero.

In addition to having a discrete nature, the random variable X generally has a smaller variance than the original variable. This is clear for the case that the so-called Shannon lower bound can be reached: in this case the optimal quantizer results in a reconstruction X that is statistically independent from the quantization error X - $\hat{X}$ and that means the variances of X and $X - \hat{X}$ must add to the variance of $X$. The limiting case of zero rate also illustrates this variance-reducing behavior: assuming a squared-error criterion the best reconstruction is the variable mean.

The discrete nature of the quantized variable $\hat{X}$, as well as its reduced variance, lead to artefacts in the reconstructed signal. These artefacts are associated with the fact that the reconstructed signal no longer has the properties that human perception assumes that it should have. In effect, a quantizer does not use all information available to reconstruct the signal. This motivates the introduction of a constraint on certain basic properties of the signal. For example, in speech coding it is natural to constrain the reconstructed speech signal to be speech-like.

The basic properties of a signal are commonly characterized by the statistical distribution of its samples, which can be estimated by studying the signal over time. A description of the joint probability distribution of the samples constitutes a model of the signal and facilitates the generation of data. Many so-called parametric coding algorithms can be interpreted as characterizing a joint probability distribution of signal samples that is appropriate for a particular sound, coding the parameters and generating a new signal according to this probability distribution. Such coding algorithms do not reconstruct the signal waveform and generally perform poorly compared to waveform coding at high rate.

Particularly at low rates, the limited number of reconstruction points of a conventional quantizer, even when optimized for a different criterion, fundamentally limits its ability to create a reconstructed signal with a probability distribution that resembles the original signal. This means that a generalization of conventional quantizer is needed if the probability distribution of the reconstructed signal must be able to approximate that of the original signal.

A relevant modification of a conventional quantizer is the dithered quantizer. (This modification is not a generalization of a conventional quantizer because it does not include the conventional quantizer as a special case; there is no natural adjustment of the system that leads to a continuum between conventional and dithered quantization that is optimal in a meaningful sense.) Dither removes the discrete nature of the distribution of the reconstructed signal. Subtractive dither is particularly attractive as it facilitates asymptotic rate-distortion optimality and can be used as an illustrative example of the methodology. Subtractive dither relies on a single quantizer. For each quantization operation, the signal is randomly displaced relative to the quantizer. The methodology requires that the quantizer is uniform and generally the dither is chosen to be uniform in the unit quantization interval. This implies that the dithered quantizer is not optimal at low rate because it is uniform and because the quantizer is displaced in a random manner.

The present invention reduces to a selectable degree the problem that, at low rate, a conventional quantizer uses only a small set of reconstruction points frequently. A central aspect of the invention is the usage of an ensemble of quantizers. The ensemble is denoted by $J$, with $j \in j$ indexing the quantizers. Each quantizer of the ensemble is characterized by its own partition and its own set of reconstruction points. The individual quantizers of the ensemble are each selected for use with a particular relative frequency. As the reconstruction points of the quantizers do not have to be identical, the number of commonly used reconstruction points can be increased arbitrarily.

The present invention also reduces to a selectable degree the problem that, with decreasing rate, a conventional quantizer progressively reduces the signal variance. This can be seen from considering what happens at zero rate. In this case only one reconstruction point is used for each quantizer of the ensemble. For each quantizer that is the reconstruction point nearest to the signal mean. By suitably setting the values of these reconstruction points, and the frequency of the selection of the corresponding quantizer, a distribution of the reconstruction that equals the distribution of the original signal, thus preserving signal variance, is made possible.

In general, as the partition of quantization cells and the set of corresponding reconstruction points of each quantizer of the ensemble can be optimized individually, and as the discrete nature of the reconstruction can be reduced, the ensemble-based approach facilitates optimization for criteria that relate to reconstruction point density.

II. Performance measures

As was mentioned above, conventional quantization aims to optimize the operational rate-distortion trade-off. One interpretation of the present invention is that it optimizes the rate-distortion trade-off subject to a constraint on the fidelity of the probability distribution of $\hat{X}$. Another interpretation is that it trades distortion versus rate versus fidelity of the probability density.

For an embodiment of the invention each of three distortion measures must be specified. In the following, specifications are provided for the measures that facilitate a particular embodiment that can form a part of a system for the encoding of audio signals.

Conventional distortion measures are generally based on the squared error criterion:

$$d(x, \hat{x}) = (x - \hat{x})^H F (x - \hat{x}), \qquad (1)$$

where F is a weighting matrix or scalar. The matrix F can be dependent on the signal X, or, for example, put emphasis on the low frequencies in a transform coder. Such more general implementations do not affect the principle of the method and for the present embodiment F in eq. (1) is set equal to the identity matrix.

For a particular quantizer indexed by $j$, the distortion measure of eq. (1) must be averaged over the probability density for the individual quantization cells. Thus, the average distortion for a quantizer j is written as

$$D^{(j)}\big(X, \phi^{(j)}\big) = \int_{\mathbb{R}^k} d\big(x, Q^{(j)}(x)\big) f_X(x)\, dx \qquad (2)$$
$$= \sum_{i \in A^{(j)}} \int_{V_i} d(x, c_i) f_X(x)\, dx,$$

where $\phi^{(j)}$ describes the parameters of quantizer j, that determine the quantization operation $Q^{(j)}(.)$ that maps x to the corresponding $\hat{x}$, $f_X(.)$ is the probability density of the random variable $X$, $k$ is the dimensionality of $X$, $V_i$ is the quantization cell which will be reconstructed by $c_i$, so that $Q^{(j)}(x) = c_i$ whenever i $\in A^{(j)}$ and x $\in V_i$. Eq. (2) can be applied to each quantizer of the ensemble separately. The average distortion for the ensemble is then the average of the distortion for all of the quantizers. As the invention provides use of one quantizer at a time, the computation of the performance measure (2) is straightforward. When $f_X(x)$ is known, then the distortion $D^{(j)}$ of eq. (2) can be computed by numerical or analytic integration of the probability density of $X$ over all quantization cells (each indexed by i). If the computation is based on a database - in the sense of a set of stored values - then the integral for each cell $V_i$ is approximated by a sum of the distortions for each data point within a quantization cell, divided by the total number of points in the entire database.

The distortion for the ensemble of quantizers is obtained simply by averaging over the quantizers. In the case where $j$ is countable, the average is given by:

$$D(X, \phi) = \sum_{j \in J} P(J = j)\, D^{(j)}\big(X, \phi^{(j)}\big). \qquad (3)$$

The next measure of performance is the rate, which is denoted by R and refers to the average rate. The rate can be specified in bits per sample (or in bits per second) required for encoding the quantization index $I$. In the present embodiment, constrained-entropy (variable-rate) coding is used. Extension of the embodiment to constrained-resolution coding is straightforward. Using the well-known technique of arithmetic coding, the average rate can be made arbitrarily close to the entropy rate of the index $I$, the limiting case being:

$$R^{(j)}(X, \phi^{(j)}) = - \sum_{i \in A^{(j)}} p_I(i) \log\big(p_I(i)\big). \qquad (4)$$

Eq. (4) must be applied to each quantizer of the ensemble separately. The total rate is then the average of the rates of all quantizers:

$$R(X, \phi) = \sum_{j \in J} P(J = j)\, R^{(j)}\big(X, \phi^{(j)}\big). \qquad (5)$$

Thus, the computation of the performance measure (4) is conventional. When the probability density function of the variable $X$, $f_X(.)$, is known, then the rate R of eq. (4) can be computed by numerical or analytic integration of the probability density of X over every quantization cell to render the cell probabilities: $p_I(i) = \int_{V_i} f_X(x)\, dx$. If the computation is based on a database, then the $p_I(i)$ can be estimated by counting the number of data in the cell and dividing by the total number of points in the database.

The third measure is the fidelity of the probability distribution of X with respect to the probability distribution of X. A complication in this respect is that, at least in principle, X is described by a probability density, denoted by $f_X(.)$, and

X is a discrete random variable with a probability mass function $p_{\hat{X}}(.)$ With an increasing number of quantizers present in the ensemble, the set of reconstructed values may progressively lose their discrete character and the probability distribution of $\hat{X}$ can be characterized by a probability density $f_{\hat{X}}(.)$ A natural measure of fidelity of the density $f_{\hat{X}}(.)$ is the Kullback-Leibler divergence with respect to $f_{\hat{X}}(.)$, which is defined as

$$K(f_X||f_{\hat{X}}) = \int_{\mathbb{R}^k} f_X(x)\log\left(\frac{f_X(x)}{f_{\hat{X}}(x)}\right) dx. \qquad (6)$$

The Kullback-Leibler divergence is nonnegative and it vanishes when the densities are equal. Note that the weighting of the "local penalty" $\log\left(\dfrac{f_X(x)}{f_{\hat{X}}(x)}\right)$ is the probability density of the source signal X. The reconstructed variable, $f_{\hat{X}}(x)$, has been generated by a plurality of quantizers in the ensemble, and thus, its probability density depends on all the quantizers involved. Therefore, unlike conventional methods, the computation of the density $f_{\hat{X}}$ necessarily takes into account all the quantizers in the ensemble. Thus, it cannot be computed with conventional techniques, and an approximate computation method will now be discussed.

For the purpose of computing the probability density of $\hat{X}$, eq. (6) is rewritten as

$$K(f_X||f_{\hat{X}}) = \int_{\mathbb{R}^k} f_X(x)\log\left(f_X(x)\right) dx \qquad (7)$$
$$- \int_{\mathbb{R}^k} f_X(x)\log\left(f_{\hat{X}}(x)\right) dx.$$

The first *term,* $\int_{\mathbb{R}^k} f_X(x)\log (f_X(x)) dx,$ is the negative differential entropy, which is a property of the signal, and does not depend on the quantizers. The reason to compute it is to find the actual Kullback-Leibler divergence. If the probability density is known, then it can be obtained by conventional integration (either numerical or analytical). If only a database is given, then various techniques are possible as described in M. Nilsson and W. B. Kleijn, "On the estimation of differential entropy from data located on embedded manifolds," IEEE Trans. Information Theory, vol. 53, no. 7, pp. 2330-2341, 2007.

The approximation of the second term in eq. (7), $\int_{\mathbb{R}^k} f_X(x)\log(f_{\hat{X}}(x))dx$ requires additional definitions. It is convenient to define a single index set $A = \{1, 2, ..., |A|\}$ for all cells of *all* quantizers in the ensemble. The cell-index sets $A^{(j)}$ are then distinct subsets that make up the index set $A$, i.e., $A = \cup_{j\in J} A^{(j)}$. For each quantizer j, a partition $V^{(j)}$ with Voronoi regions that partition $\mathbb{R}^k$ can be defined. Define $V_i^{(j)}$ to be the Voronoi region of the cell with index i in quantizer j. Note that, as defined here, the cell indices of a particular quantizer are not necessarily consecutive but, for example, interlaced with those of other quantizers (strictly considered this makes the superscript in $V^{(j)}$ redundant).

To approximate eq. (7) in a practical method, it is beneficial to exploit the high density of reconstruction points in the ensemble of quantizers (as compared to the density of the individual quantizers). (This advantage occurs if the weight of the Kullback-Leibler divergence is sufficiently high.) For the purpose of making this approximation, an *ensemble* partition W with ensemble Voronoi regions $W_i$ can be defined:

$$W_i = \left\{x: |x - c_i| \le |x - c_n|, \forall n \in A \setminus \{i\}\right\}, \quad i \in A, \qquad (8)$$

Thus, the number of cells in the partition W equals the total number of reconstruction points in all quantizers of the ensemble together. As is usual for quantizers, boundary points of the ensemble partition can be selected arbitrarily to belong to one of the nearest cells; this does not affect the algorithm. It is again emphasized that the ensemble partition W is used only as a basis for the computation of the Kullback-Leibler divergence during the design stage of the quantizer.

The second term of eq. (7) can now be computed with a resolution that is equal to the ensemble partition. That is, the second term of eq. (7) is computed as a sum

$$\int_{\mathbb{R}^k} f_X(x) \log \left( f_{\hat{X}}(x) \right) dx \approx \sum_{i \in A} p_I(i) \log \left( \frac{q_I(i)}{\breve{W}_i} \right), \tag{9}$$

where $p_I$ is the probability-mass function resulting from the original signal when partitioned by W, where $q_I$ is the probability-mass function of the reconstructed signal when partitioned by W, and where $W_i$ denotes the volume of ensemble Voronoi region $W_i$.

Clearly, $p_I(i) = \int_{wi} f_x(x)dx$. The probability $q_I(i)$ is equal to the product of the probability $P(j = J)$ of using quantizer j and the probability of quantization cell i given that the signal is quantized with the particular quantizer $j$. The probability of quantization cell i given that quantizer j is applied is $\int_{v_i} f_x(x)dx$. This means that $q_I(i) = P(j = j) \int_{vi} f_x(x)dx$. The probability $P(j = J)$ is set by the designer.

In the present embodiment of the invention, the probabilities of all quantizers in the ensemble are conveniently set equal: $P(J = j) = 1/|J|$. In this case the probability of quantization cell i is $q_I(i) = \frac{1}{|J|} \int_{V_i} f_x(x)dx.$ Eq. (9) can then be rewritten as

$$\int_{\mathbb{R}^k} f_X(x) \log \left( f_{\hat{X}}(x) \right) dx \tag{10}$$
$$\approx \sum_{i \in A} \int_{W_i} f_X(x)dx \, \log \left( \frac{\int_{V_i} f_X(x)dx}{|J| \breve{W}_i} \right).$$

In practice, the direct approximation of eq. (7) is no more difficult than the computation of eq. (10) and is more meaningful:

$$K(X, \phi) \approx \sum_{i \in A} \int_{W_i} f_X(x)dx \, \log \left( \frac{|J| \int_{W_i} f_X(x)dx}{\int_{V_i} f_X(x)dx} \right). \tag{11}$$

Where the arguments of the Kullback-Leibler divergence show that in this case the Kullback-Leibler divergence depends on the random input variable X and on the quantizer parameters of the entire ensemble of quantizers, $\phi = \{\phi^{(j)} : j \in J\}$. When the probability density function of the *variable X, $f_x(.)$,* is known, then the Kullback-Leibler divergence can be approximated by integration of the probability density of X over the quantization cells $V_i$ and $W_i$. If the computation is based on a database, then the probabilities $\int_{wi} f_x(x) dx$ and $\int v_i fX(x)dx$ can be estimated by counting the number of data points in the cells and dividing by the total number of points in the database.

### III. Implementation of the quantizer,

The quantizer consists of an ensemble of quantizers that have been optimized to operate as a set. The quantizers can be computed for each use, or when the environment triggers a recomputation, or stored. Encoder and decoder have an identical listing that specifies the quantizer used for each data point (which can be a scalar or a vector). For the illustrative embodiment all quantizers occur equally often in the list.

The quantizers can be implemented in many different ways. For example they may be based on a stored codebook of reconstruction points. Alternatively they may be based on rounding operations that remove precision from an integer variable. This may be combined with a non-uniform warping of the scale of the input signal. Yet another alternative is that reconstruction points are created based on real-time estimation of the distribution of the input signal as described further below. In this case the estimated distribution is also transmitted to the decoder. In the following illustrative embodiment, each quantizer consists of a codebook of reconstruction points. Each reconstruction point is associated with an index that is stored or transmitted.

For the illustrative embodiment the encoder each coding operation consists of the following steps:

(1) Acquisition of an input signal (scalar or vector) from the acquisition device;
(2) Selection of the quantizer index j from a time-sequential list of indices;
(3) Determination of the quantization index by searching for the nearest neighbour of the input signal in the codebook j;
(4) Lossless encoding of the transmission index; and
(5) Transmission or storage of codeword.

The decoder of the illustrative embodiment consists of the corresponding decoding steps in reverse order:

(1) Receipt of codeword from transmission channel or retrieval of codeword from storage;
(2) Decoding of the codeword, rendering the quantization index;
(3) Selection of the quantizer index j from a time-sequential list that is synchronized in time with that of the encoder;
(4) Look up of the reconstruction point in the codebook corresponding to the quantization index; and
(5) Output of the decoded signal to the rendering device.

For clarity it is noted that the acquisition and rendering devices may include pre-processing and post-processing, respectively. For example, an input signal may be subjected to transforms that are presented as an input vector to the encoder according to the invention. In such a situation the first step of the rendering device would be to perform an inverse transform. It is furthermore noted that the lossless encoding of the transmission index can be based on conventional established methods such as Huffman coding or arithmetic coding.

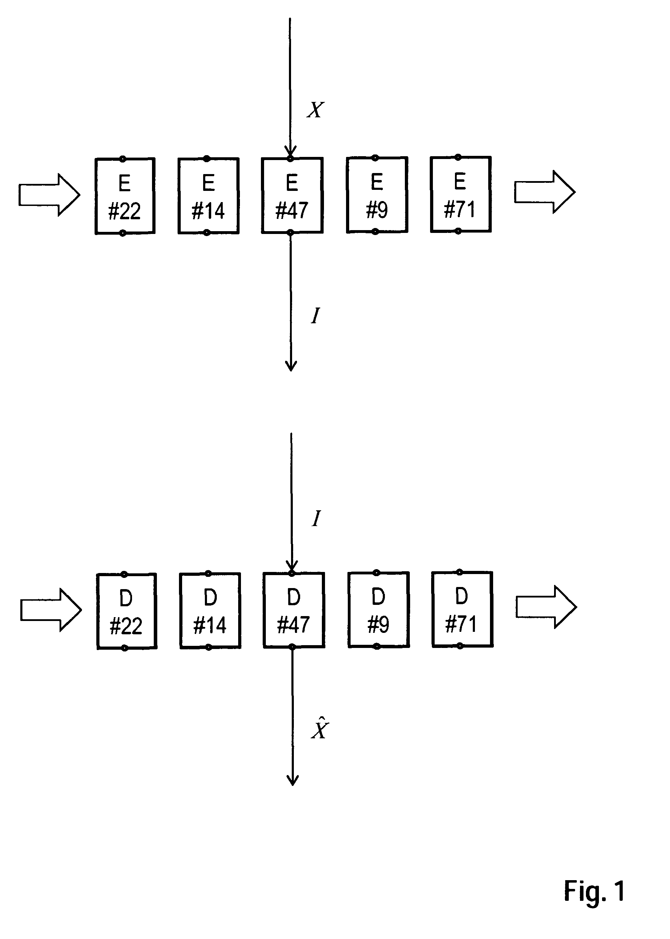

Figure 1 shows an exemplary embodiment of an encoder and a decoder according to the invention. In the upper part of the figure, a source signal X to be encoded is connected to one at a time of a succession of individual quantizers (E) belonging to a ensemble of quantizers. As is symbolically indicated, the encoders are connected according to a predetermined order, where two quantizers carrying the indices 71 and 9 have been connected in the past, a quantizer indexed by 47 is currently connected, and quantizers 14 and 22 are to be connected next. The currently connected quantizer returns a quantization index in response to the source signal sample. More precisely, the index indicates what quantization cell the source signal sample belongs to. The set of quantization indices returned by the quantizers forms a sequence $I$ of quantization indices.

The lower half of figure 1 shows an exemplary embodiment of a decoder, which may cooperate with the decoder described above. Similarly, the decoding is performed by a succession of quantizers (D) respectively labelled by indices 71, 9, 47, 14 and 22. The succession of quantizers for decoding is synchronized with the succession of quantizers used for encoding, so that corresponding quantizers used for both encoding and decoding. More precisely, a quantization index that has been generated by comparison with the quantization cells of a particular quantizer will be reconstructed by a reconstruction point optimized to reconstruct these values in the same quantization cell. The set of reconstructed samples forms a sequence X of reconstructed signal values.

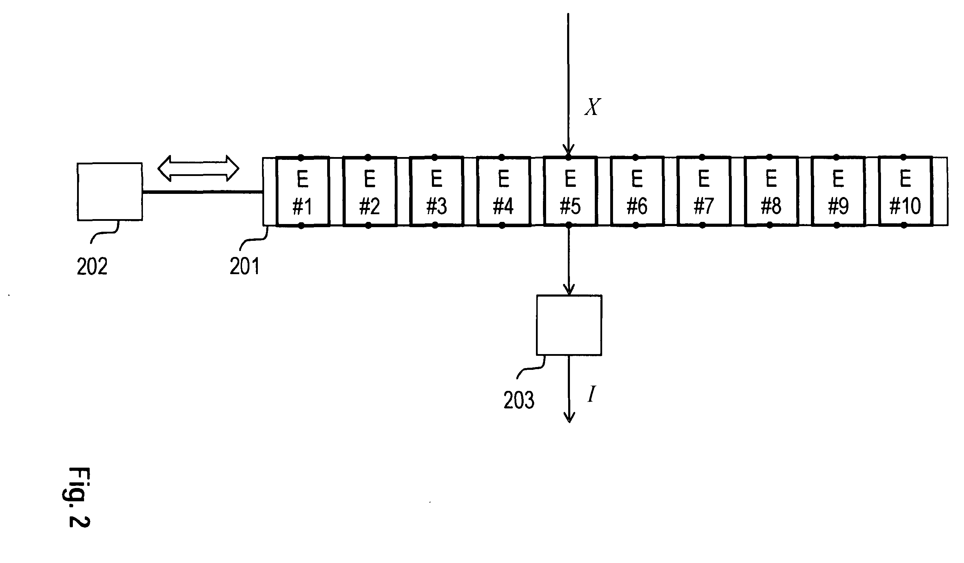

Figure 2 shows an encoder in accordance with an embodiment of the invention. The encoder comprises a memory 201 storing a plurality of quantizers (E) for encoding, each comprising a partition of the signal space into quantization cells associated with respective reconstruction points. While the encoder shown in figure 1 applies a predetermined sequence of quantizers, the encoder of figure 2 may involve random selection of the quantizers by means of a quantizer selector 202. The selection operation is shown symbolically as the quantizer memory 201 being displaceable sideways by the quantizer selector 202. An encoding device 203 encodes each source signal sample by a quantization index determined by the currently selected quantizer. Suitably, the past selections of quantizers are stored, transmitted, or generated by identical copies (with identical initialization) of the quantizer selector 202, so as to facilitate subsequent (possibly immediate) decoding of the quantization indices by the appropriate quantizers.

In encoder and decoder a particular quantizer with index j is selected with identical probability. Normally this selection probability equals the selection probability used during the design stage (as stated before eq. (10), it is generally convenient to make the selection probability for all quantizers equal). If in the implementation the quantizer selection probabilities are different from the design quantizer selection probabilities this will, in general, increase the Kullback-Leibler distance between the (continuous approximation of the) density of the reconstructed signal and the density of the original signal. Thus, usage of the selection probability employed during the design generally corresponds to using the selection probabilities that optimize a measure of fidelity of the reconstruction distribution.

## IV. Quantizer design method

The quantization design method is based on the optimization of a weighted average of the performance measures discussed in subsection II. Without loss of generality, the weight for the rate can be set equal to unity. If this procedure is interpreted as resulting from the well-known Lagrange-multiplier approach, then the weight values are then determined by the constraints. Using the notation defined above, the overall distortion measure is:

$$\eta(X,\phi) = R(X,\phi) + \lambda D(X,\phi) + \mu K(X,\phi), \qquad (12)$$

where the rate and distortion are averaged over the ensemble of quantizers and are, therefore, dependent on the parameters of all quantizers.

Each of the three terms of eq. (12) depends on the density of the original data, $f_X(.)$, the properties of the ensemble of quantizers, and the particular approximation made to compute the smoothed density $f_X^{\wedge}(.)$. The properties of the ensemble of quantizers are determined by the partitions and sets of reconstruction points $\{V_i, c_i\}_{i \in A}$, where it is remembered that $A$ indexes the partitions and reconstruction points of all quantizers in the ensemble of quantizers $J$ simultaneously.

The illustrative embodiment provided here is for a scalar quantizer. Scalar quantization suffers particularly strongly from the discretization effect, as the specific reconstruction points repeat for each successive sample of a process. The discretization effect is reduced for vector quantization, increasingly so with increasing dimensionality. However, it is noted that vector quantization does reduce the signal variance with decreasing rate, as this reduction in signal variance is optimal from a rate-distortion viewpoint.

A scalar quantizer $j$ can be described by its reconstruction points $\{C_i\}_{i \in A}^{(j)}$ and its cell boundaries $\{b_i\}_{i \in B}^{(j)}$ where $A = \cup_{j \in J} A^{(j)}$ is the set of indices labelling the cells of quantizer j, and $B^{(j)}$ is the set of indices labelling the cell boundaries of quantizer j. That is, the parameter set determining the quantizer is $\phi^{(j)} = \{\{b_i\}_{i \in B}(j), \{c_i\}_{i \in A}^{(j)}\}$. he set $B$ is defined as the union of all $B^{(j)}$, that is $B = \cup_{j \in J} B^{(j)}$. Each quantizer in the ensemble is limited to having the same number of quantization cells.

Without loss of generality the quantization indices are defined as being interlaced. That is, the set of indices $A^{(j)} = \{j + n|J|:n = 1,2, ..., |A^{(j)}|\}$, where $\left|A^{(j)}\right| = \frac{|A|}{|J|}$, labels the reconstruction value of quantizer j. More-over the interlacing of the indices is associated with an ordering of the reconstruction points: $c_i \leq c_{i+1} \; \forall i \in \{1, ..., |A| - 1\}$. Similarly, the set of boundary indices for quantizer j is interlaced and is $\{j + n|J|:n = 1,2, ...|A^{(j)}|\}$, where it is noted that there are $|A^{(j)}| + 1$ cell boundaries, where end boundaries for quantizer $j$ are defined *by* $b_j = -\infty$ and $b|_{A^{(j)}}|_{|J|+j} = \infty$. No specific constraint on physical ordering of the cell bounds needs to be imposed. The lower bound $b_i$ and that upper bound $b_{i+}|J|$ are associated with the cell with reconstruction point $c_i$; this does not require explicit computation of the quantizer index $j$.

The definitions of the performance measures simplify for the scalar case. In the following, the expressions will be provided explicitly. They can be evaluated by analytic integration, by numerical integration, or by counting data from a database, over the Voronoi regions of the partition V and and the partition $W$.

For the scalar case, and a squared-error criterion, the distortion of eq. (3) can be written as:

$$D(X,\phi) = \frac{1}{|J|} \sum_{i \in A} \int_{b_i}^{b_{i+|J|}} |x - c_i|^2 f_X(x)\, dx, \qquad (13)$$

which can also be written as

$$D(X,\phi) = \frac{1}{|J|} \sum_{i \in A} \left( \int_{b_i - c_i}^{0} x^2 f_X(x + c_i)\, dx + \int_{0}^{b_{i+|J|} - c_i} x^2 f_X(x + c_i)\, dx \right), \qquad (14)$$

The rate of eq. (4) can be written as:

$$R(X, \phi)$$ $$\tag{15}$$

$$= -\frac{1}{|J|} \sum_i \left( \left( \int_{b_i}^{b_{i+|J|}} f_X(x)\, dx \right) \log \left( \int_{b_i}^{b_{i+|J|}} f_X(x)\, dx \right) \right),$$

where the rate is averaged over the quantizers of the ensemble.

To compute the Kullback-Leibler divergence (11) in the scalar case, boundaries $\beta_i$ of the Voronoi regions $W_i$ of the partition $W$ are defined as follows:

$$\beta_i = \begin{cases} -\infty, & i = 1 \\ (c_i + c_{i+1})/2, & 2 \leq i \leq |A| \\ \infty, & i = |A| + 1 \end{cases} \tag{16}$$

Note that no new independent parameters are introduced. The Kullback-Leibler divergence can then be written as

$$K(X, \phi) \approx \sum_{i \in A} \left( \left( \int_{\beta_i}^{\beta_{i+1}} f_X(x)\, dx \right) \log \left( \frac{|J| \int_{\beta_i}^{\beta_{i+1}} f_X(x)\, dx}{\int_{b_i}^{b_{i+|J|}} f_X(x)\, dx} \right) \right), \tag{17}$$

The iterative training algorithm for the ensemble of quantizers of the illustrative embodiment can now be formulated. The initial ensemble of quantizers is based on knowledge from high-rate theory and uses zero weight for the Kullback-Leibler divergence (at high rate the Kullback-Leibler divergence approaches zero). The quantizers are uniform. The quantizer step size is set to $\Delta = 2^{h(X)-R}$, where $h(X) = -\int_R f_X(x) \log(f_X(x))\, dx$ can be computed analytically or numerically. Advantageously, the number of reconstruction points can be selected to be sufficient to cover a range $8\sigma/\Delta$ where $\sigma^2$ is the signal variance (square of standard deviation). Initially the uniform quantizers are interlaced to obtain a uniform distribution of the reconstruction points from all quantizers of the ensemble.

The algorithm iteratively searches for displacements of the boundaries and the reconstruction values from a set of displacements. The *global* displacement set can be selected advantageously as $\{-0.003\sigma, 0, 0.003\sigma\}$. For optimizing the reconstruction points, a local displacement set is computed with the purpose of preserving the interlacing. The algorithm of the illustrative embodiment is then described as:

- Initialization

    o Set $\mu$ and $\lambda$
    o Define the displacement set
    o Define a uniform point set $\{c_i\}_{i \in A}$ centered at the origin and with spacing $\Delta/|J|$
    o Define a uniform set $\{b_i\}_{i \in B}$, using $b_1 = c_1 - \Delta/2$

- End initialization
- Loop over iterations

    o Loop over quantizers $j = 1, ..., |J|$

        ■ Loop over boundaries $\{b_i\}_{i \in B}{}^{(j)}$

            • Select from displacement set the boundary displacement that minimizes $\eta$ and update the boundary accordingly

        ■ End loop over boundaries

o End loop over quantizers
o Loop over quantizers $j$ = 1, ..., $|J|$

■ Loop over reconstruction points $\{c_i\}_{i \in A}{}^{(j)}$

• Compute the local displacement set that is the global displacement, except that it is limited so that at most it halves the distance to the nearest reconstruction point
• Select from local displacement set the reconstruction-point displacement that minimizes $\eta$ and update the reconstruction point accordingly

■ End loop over boundaries

o End loop over quantizers

- End loop over iterations

The described methodology has a fixed initial configuration. It is noted that the algorithm is not guaranteed to converge to a global minimum. Thus, it may be advantageous to start from a set of initial configurations and select the best performing end solution.

In an alternative embodiment and in a further effort to obtain a good solution for various situations, it may be advantageous to start with a low weight $\mu$ and gradually increase this weight with the iteration number in a method resembling simulated annealing.

It is noted that the training algorithm is significantly faster if not the full performance measures are evaluated for each displacement, but only the terms of eq. (14), (15), and (17) that change with the displacement.

## V. Method of adaptive quantization

The training method described above leads to a particular solution for each combination or $\mu$ and $\lambda$. Recomputation is necessary in situations where the allowed rate or the signal changes with time. In such scenarios the quantizer ensemble must be adapted to the particular situation at hand and that requires a fast computation of the quantizer. An alternative embodiment exploits that, in general, the quantizer ensemble solutions vary gradually as a function of variation or $\mu$ and $\lambda$. This can be exploited for fast computation of a set of quantizers in the following training and quantization method.

The training method is:

1. Define a set of values for or $\mu$ and $\lambda$ that cover the space of values for $\mu$ and $\lambda$ that are expected to be used in a particular time-varying scenario.
2. Run the training algorithm (see subsection IV above) for each member of the set and obtain a quantizer ensemble for each member of the set.
3. Store the set of quantizer ensembles, each labelled with an index $p$ and the vector $v_p = [\mu_p, \lambda_p]$ in a table.

It is now possible to define an adaptive quantization method. An embodiment of an adaptive quantization method is:

1. Acquire the desired weights $v = [\mu, \lambda]$ for the scenario at hand.
2. Based on the vector $v = [\mu, \lambda]$ find the $|P|$ nearest neighbours $\{v_p\}_{p \in P}$ in the table such that $v = [\mu, \lambda]$ is inside their convex hull. The neighbours can be found using a simple squared error or weighted squared error criterion: $(v - v_p) C(v - v_p)^t$, where $C$ is a weighting matrix and a checking of the hull condition. $|P|$ is advantageously selected to be 3 but can be larger than 3.
3. Find a suitable positive weighting vector $s^{|P|}$, with $s^{|P|t}s^{|P|} = 1$. For the illustrative embodiment where $|P|$=3, find $s^{|P|}$ such that $v = s_1v_1 + s_2v_2 + s_3v_3$ (always possible because of the convexhull condition).
4. Compute the quantizer ensemble or the quantizer needed. To compute the boundaries, compute the $s^{|P|}$-weighted sum of corresponding boundaries of the neighbouring quantizer ensembles or quantizers. To compute the reconstruction points, compute the $s^{|P|}$ weighted sum of corresponding reconstruction points of the $|P|$ neighbouring quantizer ensembles or quantizers.

VI. Closing remarks

While the invention has been illustrated and described in detail in the drawings and foregoing description, such illustration and description are to be considered illustrative or exemplary and not restrictive; the invention is not limited to the disclosed embodiments. Alternative embodiments of the present invention may differ as regards, at least, the source signal distribution estimation, the fineness of the quantization cells, the distortion measure, the choice of reconstruction distribution and the algorithm for sampling the reconstruction distribution.

Other variations to the disclosed embodiments can be understood and effectuated by those skilled in the art in practicing the claimed invention, from a study of the drawings, the disclosure, and the appended claims. In the claims, the word 'comprising' does not exclude other elements or steps, and the indefinite article 'a' or 'an' does not exclude a plurality. A single processor or other unit may fulfil the functions of several items received in the claims. The mere fact that certain measures are recited in mutually different dependent claims does not indicate that a combination of these measured cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A method for coding a sequence ($X$) of samples of a one-dimensional or multidimensional audio or video source signal as a sequence ($I$) of quantization indices, the method including:

    defining an ensemble of quantizers ($\phi^{(j)}, j \in J$), each of which comprises a partition into quantization cells and a reconstruction point associated with each quantization cell; **characterized by**
    selecting, either randomly or following a predetermined sequence, for each source signal sample, a quantizer from said ensemble of quantizers which is to be used for encoding the sample; and
    encoding the source signal sample by a quantization index indicating a quantization cell of the selected quantizer, wherein the quantization cell contains the source signal sample,
    wherein, if the selection of quantizers is random, the method further includes:

        outputting an indication of past and/or present selections of quantizers, so as to facilitate subsequent decoding.

2. A method according to claim 1, further including:

    assigning, to each quantizer in said ensemble of quantizers, a selection probability governing the random selection of quantizers.

3. A method according to claim 2, wherein the selection probabilities are determined so as to optimize a measure of fidelity for the probability distribution of the reconstructed signal, such as a relative entropy between a source signal and a reconstructed signal.

4. A method for decoding a one-dimensional or multidimensional audio or video source signal encoded as a sequence ($I$) of quantization indices, the method including:

    obtaining an ensemble of quantizers ($\phi^{(j)}, j \in J$), each of which comprises a plurality of reconstruction points;

    and **characterized by**:

    for each quantization index:

        (i) obtaining an indication of a particular quantizer to which said quantization index refers by accessing either stored past random selections or a predetermined sequence, on which the selection of quantizers is based during encoding; and
        (ii) decoding said quantization index by a corresponding reconstruction point.

5. A method according to any one of the preceding claims, wherein each quantizer ($\phi^{(j)}$) in said ensemble of quantizers is defined on the basis of optimizations of quantization cell locations and reconstruction points with respect to a fixed objective function which is a weighted sum of at least:

a bit rate,
a signal distortion, and
a fidelity of the probability distribution of a source signal and a reconstructed signal, such as a relative entropy between a source signal and a reconstructed signal.

**6.** A method according to claim 5 referring to any of claims 1 to 3, further comprising designing an ensemble of optimal quantizers ($\phi^{(j)}$, $j \in J$) by the following steps:

receiving a sequence ($X_T$) of training signal samples;
defining said fixed objective function ($\eta$);
defining a displacement step ($C\sigma$) proportional to the standard deviation ($\sigma$) of the training signal samples;
for each quantizer to be generated:

defining an initial quantizer ($\hat{\phi}^{(j)}$) comprising a partition into quantization cells and corresponding reconstruction points;

performing at least one iteration of the following steps:

(i) locally optimizing, within the displacement step, the partition with respect to the objective function ($\eta$) evaluated for the sequence ($X_T$) of training signal samples, thereby obtaining an optimized partition;
(ii) locally optimizing each of said initial reconstruction points within at most the displacement step ($C\sigma$) with respect to the objective function ($\eta$) evaluated for the sequence ($X_T$) of training signal samples, thereby obtaining an optimized reconstruction point ($c_i^{(j)}$); and

storing a quantizer ($\phi^{(j)}$) comprising the optimized quantization cells and reconstruction points; and
outputting an ensemble of quantizers ($\phi^{(j)}$, $j \in J$) containing the stored quantizers.

**7.** A method for adaptively encoding a sequence of samples of a one-dimensional or multidimensional audio or video source signal, the method including the steps of any one of claims 5 or 6 referring to any of claims 1 to 3 and further including:

defining, responsive to an observed variation of properties of the source signal samples, a further ensemble of quantizers on the basis of optimizations with respect to a further fixed objective function, which is a weighted sum of at least:

a bit rate,
a signal distortion, and
a fidelity of the probability distributions of a source signal and a reconstructed signal, such as a relative entropy between a source signal and a reconstructed signal,
wherein the weighting of the further objective function is determined in accordance with the properties of the source signal samples.

**8.** A computer-program product comprising computer-readable instructions which when executed perform any one of the methods set forth in the preceding claims.

**9.** An encoder for coding a sequence ($X$) of samples of a one-dimensional or multidimensional audio or video source signal as a sequence ($I$) of quantization indices, the encoder including:

a quantizer memory (201) for storing an ensemble of quantizers ($\phi^{(j)}$, $j \in J$), each of which comprises a partition into quantization cells and a reconstruction point in each quantization cell; **characterized by** further including :
a quantizer selector (202) for selecting, either randomly or based on a predetermined sequence, for each source signal sample, a quantizer from said stored ensemble of quantizers which is to be used for encoding the sample; and
an encoding device (203) for encoding each source signal sample by a quantization index indicating a quantization cell of the quantizer selected for the source signal sample that contains the source signal sample, wherein the quantizer selector comprises:

either a sequence memory for storing a predefined sequence governing the selection of quantizers,
or a random selector adapted to select a quantizer from said ensemble of quantizers and for storing a sequence indicative of at least the latest selected quantizers, so as to facilitate subsequent decoding.

**10.** An encoder according to claim 9, wherein the quantizer memory further is adapted to store a selection probability associated with each quantizer, based on which the random selector is adapted to operate.

**11.** A decoder for decoding a one-dimensional or multidimensional audio or video source signal encoded as a sequence ($I$) of quantization indices, the encoder including:

a quantizer memory for storing an ensemble of quantizers ($\phi^{(j)}, j \in J$), each comprising a plurality of reconstruction points;

**characterized by**:

a quantizer indicator for storing, for each quantization index, an indication of a particular quantizer to which it refers, said indications being either stored past random selections or a predetermined sequence on which the selection of quantizers is based during encoding; and
a decoding device for decoding said quantization index by a corresponding reconstruction point.

**Patentansprüche**

**1.** Verfahren zum Kodieren einer Folge ($X$) von Abtastwerten eines eindimensionalen oder mehrdimensionalen Ton- oder Videoquellsignals als eine Folge ($I$) von Quantisierungsindizes, wobei das Verfahren Folgendes umfasst:

Definieren einer Menge von Quantisierern ($\phi^{(j)}, j \in J$), von denen jeder eine Aufteilung in Quantisierungszellen und einen Rekonstruktionspunkt umfasst, der jeder Quantisierungszelle zugehörig ist;
**gekennzeichnet durch**:

Auswählen, entweder zufällig oder einer vorbestimmten Folge folgend, eines Quantisierers, der für das Kodieren des Abtastwerts zu verwenden ist, von der Menge von Quantisierern, für jeden Quellsignal-Abtastwert; und
Kodieren des Quellsignal-Abtastwerts **durch** einen Quantisierungsindex, der eine Quantisierungszelle des ausgewählten Quantisierers angibt, wobei die Quantisierungszelle den Quellsignal-Abtastwert enthält; wobei, wenn die Auswahl der Quantisierer zufällig erfolgt, das Verfahren ferner Folgendes umfasst:

Ausgeben einer Angabe von vergangenen und/oder gegenwärtigen Auswahlen von Quantisierern, derart, dass das anschließende Dekodieren erleichtert wird.

**2.** Verfahren nach Anspruch 1, das ferner Folgendes umfasst:

Zuweisen einer Auswahlwahrscheinlichkeit, die die zufällige Auswahl von Quantisierern regelt, zu jedem Quantisierer in der Menge von Quantisierern.

**3.** Verfahren nach Anspruch 2, wobei die Auswahlwahrscheinlichkeiten derart bestimmt werden, dass ein Maß für die Wiedergabetreue für die Wahrscheinlichkeitsverteilung des rekonstruierten Signals, wie beispielsweise eine relative Entropie zwischen einem Quellsignal und einem rekonstruierten Signal, optimiert wird.

**4.** Verfahren zum Dekodieren eines als eine Folge (I) von Quantisierungsindizes kodierten eindimensionalen oder mehrdimensionalen Ton- oder Videoquellsignals, wobei das Verfahren Folgendes umfasst:

Erhalten einer Menge von Quantisierern ($\phi^{(j)}, j \in J$), von denen jeder mehrere Rekonstruktionspunkte umfasst; und **gekennzeichnet durch**:

für jeden Quantisierungsindex:

(i) Erhalten einer Angabe eines bestimmten Quantisierers, auf den der Quantisierungsindex verweist, **durch** Zugreifen auf entweder gespeicherte vergangene Zufallsauswahlen oder auf eine vorbestimmte Folge, auf denen/der die Auswahl der Quantisierer während des Kodierens gründet; und
(ii) Dekodieren des Quantisierungsindex **durch** einen entsprechenden Rekonstruktionspunkt.

5.  Verfahren nach einem der vorhergehenden Ansprüche, wobei jeder Quantisierer ($\phi^{(j)}$) in der Menge von Quantisierern auf der Grundlage von Optimierungen von Quantisierungszellenorten und Rekonstruktionspunkten in Bezug auf eine feste Zielfunktion definiert wird, die eine gewichtete Summe von mindestens Folgendem ist:

>   einer Bitrate,
>   einer Signalverzerrung, und
>   einer Wiedergabetreue der Wahrscheinlichkeitsverteilung eines Quellsignals und eines rekonstruierten Signals, wie beispielsweise eine relative Entropie zwischen einem Quellsignal und einem rekonstruierten Signal.

6.  Verfahren nach Anspruch 5, sofern er sich auf einen der Ansprüche 1 bis 3 bezieht, das ferner das Bestimmen einer Menge von optimalen Quantisierern ($\phi^{(j)}$, $j \in J$) durch die folgenden Schritte umfasst:

>   Empfangen einer Folge ($X_T$) von Trainingssignal-Abtastwerten;
>   Definieren der festen Zielfunktion ($\eta$);
>   Definieren eines Verschiebungsschritts ($C\sigma$) proportional zur Standardabweichung ($\sigma$) der Trainingssignal-Abtastwerte;
>   für jeden zu erzeugenden Quantisierer:
>
>>   Definieren eines Anfangsquantisierers ($\hat{\phi}^{(j)}$), der eine Aufteilung in Quantisierungszellen und entsprechende Rekonstruktionspunkte umfasst;
>>   Durchführen von mindestens einer Iteration der folgenden Schritte:
>>
>>>   (i) lokales Optimieren der Aufteilung in Bezug auf die für die Folge ($X_T$) von Trainingssignal-Abtastwerten bewertete Zielfunktion ($\eta$) innerhalb des Verschiebungsschritts, wodurch eine optimierte Aufteilung erhalten wird;
>>>   (ii) lokales Optimieren von jedem von den Anfangsrekonstruktionspunkten innerhalb von höchstens dem Verschiebungsschritt ($C\sigma$) in Bezug auf die für die Folge ($X_T$) von Trainingssignal-Abtastwerten bewertete Zielfunktion ($\eta$), wodurch ein optimierter Rekonstruktionspunkt ($c_i^{(j)}$) erhalten wird; und
>>
>>   Speichern eines Quantisierers ($\phi^{(j)}$), der die optimierten Quantisierungszellen und Rekonstruktionspunkte umfasst; und
>>   Ausgeben einer Menge von Quantisierern ($\phi^{(j)}$, $j \in J$), die die gespeicherten Quantisierer enthält.

7.  Verfahren zum adaptiven Kodieren einer Folge von Abtastwerten von einem eindimensionalen oder mehrdimensionalen Ton- oder Videoquellsignal, wobei das Verfahren die Schritte nach einem der Ansprüche 5 oder 6 umfasst, sofern sie sich auf einen der Ansprüche 1 bis 3 beziehen, das ferner Folgendes umfasst:

>   als Reaktion auf eine beobachtete Veränderung der Eigenschaften der Quellsignal-Abtastwerte, Definieren einer weiteren Menge von Quantisierern auf der Grundlage von Optimierungen in Bezug auf eine weitere feste Zielfunktion, die eine gewichtete Summe von mindestens Folgendem ist:
>
>>   einer Bitrate,
>>   einer Signalverzerrung, und
>>   einer Wiedergabetreue der Wahrscheinlichkeitsverteilungen eines Quellsignals und eines rekonstruierten Signals, wie beispielsweise eine relative Entropie zwischen einem Quellsignal und einem rekonstruierten Signal,
>>   wobei die Gewichtung der weiteren Zielfunktion gemäß den Eigenschaften der Quellsignal-Abtastwerte bestimmt wird.

8.  Computerprogrammprodukt, das maschinenlesbare Befehle umfasst, die, wenn sie ausgeführt werden, eines der Verfahren nach den vorhergehenden Ansprüchen durchführen.

9.  Kodierer zum Kodieren einer Folge ($X$) von Abtastwerten eines eindimensionalen oder mehrdimensionalen Ton- oder Videoquellsignals als eine Folge (*I*) von Quantisierungsindizes, wobei der Kodierer Folgendes umfasst:

einen Quantisiererspeicher (201) zum Speichern einer Menge von Quantisierern ($\phi^{(j)}$, $j \in J$), von denen jeder eine Aufteilung in Quantisierungszellen und einen Rekonstruktionspunkt in jeder Quantisierungszelle umfasst; **dadurch gekennzeichnet, dass** er ferner Folgendes umfasst:

einen Quantisiererwähler (202) zum Auswählen, entweder zufällig oder auf der Grundlage einer vorbestimmten Folge, eines Quantisierers von der gespeicherten Menge von Quantisierern, der für das Kodieren des Abtastwerts zu verwenden ist, für jeden Quellsignal-Abtastwert; und
eine Kodierungsvorrichtung (203) zum Kodieren jedes Quellsignal-Abtastwerts durch einen Quantisierungsindex, der eine Quantisierungszelle des Quantisierers angibt, der für den Quellsignal-Abtastwert ausgewählt wurde, der den Quellsignal-Abtastwert enthält, wobei der Quantisiererwähler Folgendes umfasst:

entweder einen Folgenspeicher zum Speichern einer vordefinierten Folge, die die Auswahl von Quantisierern regelt;
oder einen Zufallswähler, der angepasst ist, um einen Quantisierer von der Menge von Quantisierern auszuwählen und um eine Folge zu speichern, die mindestens die letzten ausgewählten Quantisierer angibt, um das anschließende Dekodieren zu erleichtern.

10. Kodierer nach Anspruch 9, wobei der Quantisiererspeicher ferner angepasst ist, um eine Auswahlwahrscheinlichkeit auszuwählen, die jedem Quantisierer zugehörig ist, wobei der Zufallswähler angepasst ist, um auf der Grundlage von dieser zu arbeiten.

11. Dekodierer zum Dekodieren eines als eine Folge (*I*) von Quantisierungsindizes kodierten eindimensionalen oder mehrdimensionalen Ton- oder Videoquellsignals, wobei der Dekodierer Folgendes umfasst:

einen Quantisiererspeicher zum Speichern einer Menge von Quantisierern ($\phi^{(j)}$, $j \in J$), die jeweils mehrere Rekonstruktionspunkte umfassen;
**gekennzeichnet durch**:

einen Quantisiereranzeiger zum Speichern einer Angabe eines bestimmten Quantisierers, auf den er verweist, für jeden Quantisierungsindex, wobei die Angaben entweder nach Zufallsauswahlen oder einer vorbestimmten Folge, auf der die Auswahl von Quantisierern während des Kodierens gründet, gespeichert werden; und
eine Dekodierungsvorrichtung zum Dekodieren des Quantisierungsindex **durch** einen entsprechenden Rekonstruktionspunkt.

## Revendications

1. Procédé de codage d'une séquence (X) d'échantillons d'un signal de source audio ou vidéo à une ou plusieurs dimensions sous forme d'une séquence (I) d'indices de quantification, le procédé comprenant :

la définition d'un ensemble de quantificateurs ($\phi^{(j)}$, $j \in J$) comprenant chacun une partition dans des cellules de quantification et un point de reconstruction associé à chaque cellule de quantification ;
**caractérisé par**
la sélection, de manière aléatoire ou en suivant une séquence prédéterminée, pour chaque échantillon de signal de source, d'un quantificateur dans ledit ensemble de quantificateurs qui doit être utilisé pour coder l'échantillon ; et
le codage de l'échantillon de signal de source par un indice de quantification indiquant une cellule de quantification du quantificateur sélectionné, dans lequel la cellule de quantification contient l'échantillon de signal de source,
dans lequel, si la sélection de quantificateurs est aléatoire, le procédé comprend en outre :

la délivrance d'une indication de sélections passées et/ou présentes de quantificateurs afin de faciliter le décodage ultérieur.

2. Procédé selon la revendication 1, comprenant en outre :

l'affectation, à chaque quantificateur dans ledit ensemble de quantificateurs, d'une probabilité de sélection régissant la sélection aléatoire de quantificateurs.

3. Procédé selon la revendication 2, dans lequel les probabilités de sélection sont déterminées de manière à optimiser une mesure de fidélité pour la distribution de probabilité du signal reconstruit, comme une entropie relative entre un signal de source et un signal reconstruit.

4. Procédé de décodage d'un signal de source audio ou vidéo à une ou plusieurs dimensions codé sous forme d'une séquence (I) d'indices de quantification, le procédé comprenant :

l'obtention d'un ensemble de quantificateurs ($\phi^{(j)}$, $j \in J$) comprenant chacun une pluralité de points de reconstruction ; et
**caractérisé par** :

pour chaque indice de quantification :

(i) l'obtention d'une indication d'un quantificateur particulier auquel ledit indice de quantification renvoie en accédant à des sélections aléatoires précédemment mémorisées ou à une séquence prédéterminée, sur laquelle la sélection de quantificateurs est basée au cours du codage ; et
(ii) le décodage dudit indice de quantification par un point de reconstruction correspondant.

5. Procédé selon l'une quelconque des revendications précédentes, dans lequel chaque quantificateur ($\phi^{(j)}$) dans ledit ensemble de quantificateurs est défini sur la base d'optimisations d'emplacements de cellules de quantification et de points de reconstruction par rapport à une fonction objective fixe qui est une somme pondérée d'au moins :

un débit binaire,
une distorsion de signal, et
une fidélité de la distribution de probabilité d'un signal de source et d'un signal reconstruit, comme une entropie relative entre un signal de source et un signal reconstruit.

6. Procédé selon la revendication 5 en référence à l'une quelconque des revendications 1 à 3, comprenant en outre la conception d'un ensemble de quantificateurs optimaux ($\phi^{(j)}$, $j \in J$) par les étapes suivantes :

la réception d'une séquence ($X_T$) d'échantillons de signal de formation ;
la définition de ladite fonction objective fixe ($\eta$) ;
la définition d'un pas de déplacement ($C\sigma$) proportionnel à l'écart-type ($\sigma$) des échantillons de signal de formation ;
pour chaque quantificateur à générer :

la définition d'un quantificateur initial ($\hat{\phi}^{(j)}$) comprenant une partition en cellules de quantification et des points de reconstruction correspondants ;
l'exécution d'au moins une itération des étapes suivantes :

(i) l'optimisation locale, à l'intérieur du pas de déplacement, de la partition par rapport à la fonction objective ($\eta$) évaluée pour la séquence ($X_T$) d'échantillons de signal de formation, en obtenant de ce fait une partition optimisée ;
(ii) l'optimisation locale de chacun desdits points de reconstruction initiaux à l'intérieur d'au plus le pas de déplacement ($C\sigma$) par rapport à la fonction objective ($\eta$) évaluée par la séquence ($X_T$) d'échantillons de signal de formation, en obtenant de ce fait un point de reconstruction optimisé ($c_i^{(j)}$) ; et

la mémorisation d'un quantificateur ($\phi^{(j)}$) comprenant les cellules de quantification optimisées et les points de reconstruction optimisés ; et
la délivrance d'un ensemble de quantificateurs ($\phi^{(j)}$, $j \in J$) contenant les quantificateurs mémorisés.

7. Procédé de codage adaptatif d'une séquence d'échantillons d'un signal de source audio ou vidéo à une ou plusieurs dimensions, le procédé comprenant les étapes selon la revendication 5 ou 6 en référence à l'une quelconque des revendications 1 à 3 et comprenant en outre :

la définition, en réponse à une variation observée de propriétés des échantillons de signal de source, d'un autre ensemble de quantificateurs sur la base d'optimisations par rapport à une autre fonction objective fixe, qui est une somme pondérée d'au moins :

un débit binaire,
une distorsion de signal, et
une fidélité des distributions de probabilité d'un signal de source et d'un signal reconstruit, comme une entropie relative entre un signal de source et un signal reconstruit,
dans lequel la pondération de l'autre fonction objective est déterminée en fonction des propriétés des échantillons de signal de source.

8. Produit de programme informatique comprenant des instructions lisibles par ordinateur qui, lorsqu'elles sont exécutées, effectuent l'un quelconque des procédés des revendications précédentes.

9. Codeur pour effectuer le codage d'une séquence (X) d'échantillons d'un signal de source audio ou vidéo à une ou plusieurs dimensions sous forme d'une séquence (I) d'indices de quantification, le codeur comprenant :

une mémoire de quantificateurs (201) pour mémoriser un ensemble de quantificateurs ($\phi^{(j)}$, $j \in J$) comprenant chacun une partition dans des cellules de quantification et un point de reconstruction dans chaque cellule de quantification ;
**caractérisé en ce qu'**il comprend en outre :

un sélecteur de quantificateur (202) pour effectuer la sélection, de manière aléatoire ou sur la base d'une séquence prédéterminée, pour chaque échantillon de signal de source, d'un quantificateur dans ledit ensemble mémorisé de quantificateurs qui doit être utilisé pour coder l'échantillon ; et
un dispositif de codage (203) pour effectuer le codage de chaque échantillon de signal de source par un indice de quantification indiquant une cellule de quantification du quantificateur sélectionné pour l'échantillon de signal de source qui contient l'échantillon de signal de source, dans lequel le sélecteur de quantificateur comprend :

une mémoire de séquence pour mémoriser une séquence prédéfinie régissant la sélection de quantificateurs,
ou un sélecteur aléatoire apte à sélectionner un quantificateur dans ledit ensemble de quantificateurs et à mémoriser une séquence indicative d'au moins les quantificateurs sélectionnés récemment, afin de faciliter le décodage ultérieur.

10. Codeur selon la revendication 9, dans lequel la mémoire de quantificateurs est en outre apte à effectuer la mémorisation d'une probabilité de sélection associée à chaque quantificateur, sur la base de laquelle le sélecteur aléatoire est apte à fonctionner.

11. Décodeur pour effectuer le décodage d'un signal de source audio ou vidéo à une ou plusieurs dimensions codé sous forme d'une séquence (I) d'indices de quantification, le décodeur comprenant :

une mémoire de quantificateurs pour mémoriser un ensemble de quantificateurs ($\phi^{(j)}$, $j \in J$) comprenant chacun une pluralité de points de reconstruction ; et
**caractérisé par** :

un indicateur de quantificateur pour mémoriser, pour chaque indice de quantification, une indication d'un quantificateur particulier auquel ledit indice de quantification renvoie, lesdites indications étant des sélections aléatoires précédemment mémorisées ou une séquence prédéterminée sur laquelle la sélection de quantificateurs est basée au cours du codage ; et
un dispositif de décodage pour effectuer le décodage dudit indice de quantification par un point de reconstruction correspondant.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **M. ERNE.** Perceptual audio coders 'what to listen for. *111th Convention of the Audio Engineering Society,* September 2001
- **L. DAUDET ; M. SANDLER.** MDCT analysis of sinusoids: exact results and applications to coding artifacts reduction. *IEEE Transactions on Speech and Audio Processing,* May 2004, vol. 12 (3
- **S. A. RAMPRASHAD.** High quality embedded wideband speech coding using an inherently layered coding paradigm. *Proc. IEEE International Conference on Acoustics, Speech, and Signal Processing ICASSP '00,* June 2000, vol. 2
- **M. NILSSON ; W. B. KLEIJN.** On the estimation of differential entropy from data located on embedded manifolds. *IEEE Trans. Information Theory,* 2007, vol. 53 (7), 2330-2341